# DEMANDE DE BREVET EUROPEEN

(11) **EP 1 026 917 A1**
(43) Date de publication de la demande: **09.08.2000**
(21) Numéro de dépôt: 00410008.7
(22) Date de dépôt: 28.01.2000
(51) Int. Cl.: H04Q 11/04

(54) **Système de régulation de débit de plusieurs transmissions concourantes sur une voie de communication**

(30) Priorité: 29.01.1999 FR 9901191
(71) Demandeur: STMicroelectronics SA, 94250 Gentilly Cedex (FR)
(72) Inventeur: Moniot, Pascal, 38190 Bernin (FR)
(74) Mandataire: de Beaumont, Michel

(57) **Abrégé**

L'invention concerne un procédé de régulation des débits de plusieurs transmissions numériques concourantes comprenant les étapes consistant à inscrire, pour chaque transmission, un index correspondant à une cellule de données de la transmission à un emplacement d'une première file (18, 18a) ; et à examiner successivement les emplacements de la file à une cadence (CCK) correspondant à la cadence de transmission des cellules. Si un emplacement courant contient un index, le procédé comprend les étapes consistant à transmettre la cellule correspondante, à libérer l'emplacement et à inscrire l'index à un emplacement distant de l'emplacement courant d'une valeur déterminée par le débit de la transmission associée.

## Description

La présente invention concerne un procédé de régulation des débits en émission de plusieurs transmissions sur une même voie de communication qui impose des contraintes de débit différentes aux transmissions. Un tel procédé de régulation, couramment appelée "traffic shaping" ou mise en forme de flux, est utilisé, par exemple, dans un commutateur multiprotocole qui sert d'interface entre un réseau ATM et des réseaux Ethernet.

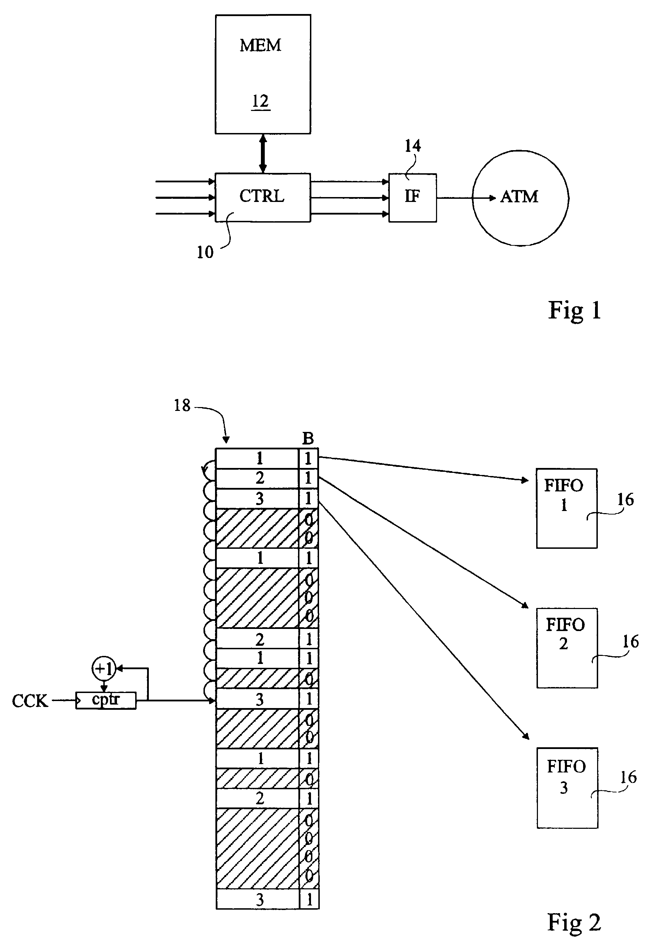

La figure 1 représente de manière très schématique un commutateur émettant sur un réseau ATM. Les données de plusieurs transmissions courantes, ou connexions ouvertes, parviennent à un circuit de commande 10 qui stocke les données dans une mémoire 12 avant de les envoyer de manière régulée sur le réseau ATM par l'intermédiaire d'une interface adéquate 14.

Lorsqu'une connexion est créée sur un réseau ATM, il se produit initialement une négociation entre l'émetteur et le réseau pour déterminer, entre autres, le débit qui sera utilisé pour l'émission. En effet, le débit disponible en émission sur un réseau ATM (par exemple 155 Mbits/s) doit être partageable en temps réel entre toutes les connexions possibles. Ainsi, à l'issue de la négociation, un débit est alloué à la nouvelle connexion, lequel débit doit être respecté sous peine de voir le réseau perdre des données.

Par ailleurs, la négociation porte également sur un type de connexion qui détermine un "profil" de débit. Les types de connexion sont CBR ("Constant Bit Rate" ou débit constant), VBR ("Variable Bit Rate" ou débit variable) temps réel ou non, ABR ("Available Bit Rate" ou débit disponible), et UBR ("Unspecified Bit Rate" ou débit non-spécifié).

Pour les connexions de type CBR, le réseau garantit un débit fixe, lequel débit ne doit pas être dépassé.

Pour les connexions de type VBR temps réel, le réseau fixe un débit maximal (PCR "Peak Cell-Rate") et garantit un débit qui peut être maintenu (SCR "Sustainable Cell-Rate") et une taille maximale de salve (MBS "Maximum Burst Size"). La source peut émettre au débit maximal PCR pendant une salve de taille MBS à des instants négociés et émettre au débit SCR par ailleurs. En outre, le réseau garantit un objectif de variation de retard de cellule (CDV "Cell Delay Variation").

Les connexions de type VBR non temps réel, ont les mêmes caractéristiques que les connexions de type VBR temps réel, mais ne garantissent pas d'objectif de variation de retard de cellule CDV.

Pour les connexions de type ABR, le réseau fixe le débit maximal PCR et garantit un débit minimal (MCR "Minimal Cell-Rate"), le débit de l'émission pouvant varier entre ces deux limites.

Finalement, pour les connexions de type UBR, le réseau ne garantit aucun débit. Le réseau utilise la technique du "mieux qu'il peut".

Un circuit chargé de l'émission sur un réseau ATM doit donc réguler les débits des données émises sur le réseau ATM pour respecter les profils de débit négociés.

Pour cela, des circuits de mise en forme de flux classiques associent aux connexions ouvertes en émission des compteurs qui comptent le nombre de données émises pour en déduire le débit et ajuster l'émission des données pour que la connexion soit conforme aux paramètres négociés. La gestion de ces compteurs et la régulation correspondante conduit à des circuits complexes. Un exemple de tel circuit est décrit dans le brevet américain 5 724 513.

Un objet de la présente invention est de prévoir un procédé de régulation de débit qui soit particulièrement simple à mettre en oeuvre dans un circuit.

Pour atteindre cet objet, la présente invention prévoit un procédé de régulation des débits de plusieurs transmissions numériques concourantes comprenant les étapes consistant à inscrire, pour chaque transmission, un index correspondant à une cellule de données de la transmission à un emplacement d'une première file ; et à examiner successivement les emplacements de la file à une cadence correspondant à la cadence de transmission des cellules. Si un emplacement courant contient un index, le procédé comprend les étapes consistant à transmettre la cellule correspondante, à libérer l'emplacement et à inscrire l'index à un emplacement distant de l 'emplacement courant d'une valeur déterminée par le débit de la transmission associée.

Selon un mode de réalisation de la présente invention, le procédé comprend les étapes consistant à inscrire dans la première file des index correspondant à des transmissions de priorité élevée et inscrire de la même manière dans une deuxième file des index correspondant à des transmissions de priorité inférieure ; à examiner successivement les emplacements de la deuxième file ; et si un emplacement courant de la deuxième file contient un index, à transmettre la cellule correspondante lorsque l'examen de la première file tombe sur un emplacement vide.

Selon un mode de réalisation de la présente invention, le procédé comprend les étapes consistant à examiner successivement les emplacements de la première file à une cadence supérieure à la cadence de transmission des cellules ; à suspendre l'examen de la première file en atteignant un emplacement indiqué par un pointeur de débit qui est incrémenté par N emplacements à la fois à la cadence de transmission de N cellules ; et, si un emplacement courant de la deuxième file contient un index, à transmettre la cellule correspondante lorsque l' examen de la première file tombe sur un emplacement vide ou que l'examen de la première file est suspendu.

Selon un mode de réalisation de la présente invention, l'examen de la première file est suspendu lorsque le nombre d' index rencontrés dans la première file atteint une limite prédéterminée, l'examen reprenant à l'incrémentation du pointeur de débit.

Selon un mode de réalisation de la présente invention, le procédé comprend les étapes consistant à inscrire dans un enplacement de la première file un index fantôme ; et, si un emplacement examiné dans la première file contient un index fantôme, à libérer l'emplacement et inscrire l'index fantôme dans la première file à une distance aléatoire.

Selon un mode de réalisation de la présente invention, le procédé comprend les étapes consistant à compter le nombre de transmissions de chaque type correspondant aux index inscrits dans la ou les files ; et, si le nombre de transmissions d'un type donné atteint une limite prédéterminée, à interdire toute création d'une nouvelle transmission de ce type.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente très schématiquement un circuit d'émission sur un réseau ATM ;
la figure 2 illustre une première organisation mémoire exploitée par un procédé de régulation de débit d'émission selon l'invention ;
la figure 3 illustre une deuxième organisation mémoire exploitée par un procédé de régulation de débit selon l'invention ; et
la figure 4 représente un chronogramme illustrant un exemple d'émission de données utilisant l'organisation mémoire de la figure 3.

La figure 2 est destinée à illustrer un premier mode de régulation de débit selon l'invention. Les données à émettre sur un réseau ATM sont classiquement émises par "cellules", chaque cellule comprenant 53 octets. Le nombre de transmissions concourantes est variable et chacune d'elles est associée à une "connexion ouverte". A chaque connexion ouverte est allouée, dans la mémoire 12 (figure 1), un tampon 16 de type premier-entré-premier-sorti (FIFO) dans lequel sont stockés les cellules à émettre sur le réseau ATM pour la connexion.

Dans une file 18, on inscrit des index, chacun correspondant à une connexion ouverte et pointant vers le tampon 16 associé. Un pointeur de cellule cptr pointe sur un emplacement de la file 18 en cours de traitement. Il est incrémenté par unités à la cadence d'une horloge cellule CCK et définit en conséquence l'ordre d'émission des cellules. La période de l'horloge CCK est égale à un temps cellule, un temps cellule étant le temps utilisé pour émettre une cellule et étant fixé par la bande passante maximale allouée sur la liaison physique d'émission. Chaque index contient, outre un pointeur vers une cellule à émettre, des informations sur la connexion, telles que le type (CBR, VBR, ABR), le profil de débit (débit moyen et/ou débit crête) ... La procédure d'inscription des index dans la file 18 constitue un aspect essentiel de l'invention et est décrite ci-après.

A l'ouverture d'une nouvelle connexion, on inscrit l'index correspondant dans le premier emplacement libre rencontré par le pointeur de cellule cptr. Un bit B indique si l'emplacement est occupé ou non.

Dans l'exemple de la figure 2, on a inscrit consécutivement des index 1, 2 et 3 aux premiers emplacements de la file 18, ces index pointant sur des tampons 16 correspondants 1, 2 et 3.

Si le pointeur de cellule cptr tombe sur un emplacement libre, aucune action n'est entreprise pendant le temps cellule correspondant, sauf que le pointeur cptr est incrémenté.

Si le pointeur de cellule cptr tombe sur un emplacement contenant un index, la cellule, fournie par le tampon 16 correspondant, est immédiatement transmise. L'emplacement est libéré et l'index est de nouveau inscrit dans la file 18, à une distance inversement proportionnelle au débit de la transmission associée. Dans l'exemple de la figure 2, l'index 1 est réinscrit cinq emplacements plus loin, l'index 2 est réinscrit 8 emplacements plus loin, et l'index 3 est réinscrit 10 emplacements plus loin. Ceci signifie que la transmission associée à l'index 1 est deux fois plus rapide que la transmission associée à l'index 3 et 8/5 fois plus rapide que la transmission associée à l'index 2. Bien entendu, la file 18 est utilisée de manière circulaire, c'est-à-dire qu'un index examiné à la fin de la file est réinscrit, le cas échéant, au début de la file.

Si l'emplacement cible où un index devrait être réinscrit est occupé, l'index est inscrit à l'emplacement libre avoisinant le plus proche, avant ou après l'emplacement cible.

La taille de la file 18 ainsi que la fréquence de l'horloge CCK déterminent le débit minimal d'une connexion. En effet, pour retomber sur un index le plus tard possible dans la file, cet index doit être réinscrit à l'emplacement où il était, à savoir à une distance égale à la taille de la file. La taille de la file est donc choisie en fonction du débit minimal que l'on souhaite assurer.

Avec cette configuration, si le nombre de connexions reste relativement faible, un index donné sera rencontré par le pointeur de cellule cptr de manière périodique, la période étant inversement proportionnelle au débit associé à l'index. En d'autres termes, on assure un débit constant pour la connexion.

Si le nombre de connexions augmente, la probabilité pour qu'un index soit réinscrit exactement à la distance souhaitée diminue. Plus spécifiquement, l'index est inscrit tantôt un peu avant l'emplacement cible, tantôt un peu après, de sorte que l'on obtient un débit fluctuant légèrement autour d'une valeur moyenne constante. Ce phénomène est appelé gigue du temps cellule.

En fait, les emplacements de la file sont occupés selon une loi pseudo-aléatoire de sorte qu'il est probable de retrouver périodiquement une concentration d'emplacements consécutifs occupés. La taille de la concentration croît avec le nombre de connexions. Si le nombre de connexions est élevé, il est probable que des index soient réinscrits loin des emplacements cible, d'où il résulte une fluctuation importante du débit instantané, qui pourrait être incompatible avec les connexions de type CBR (de débit constant).

Une première solution selon l'invention pour éviter ce problème consiste à inscrire dans la file 18 un index fantôme qui ne correspond à aucune connexion réelle, mais à une connexion fantôme de débit aléatoire. Plus spécifiquement, lorsque le pointeur de cellule cptr tombe sur un emplacement contenant un index fantôme, aucune cellule n'est émise, mais l'emplacement est libéré et l'index fantôme est réinscrit à une distance aléatoire. Un emplacement occupé par un index fantôme, comme un emplacement occupé par un index normal, ne peut servir à inscrire un autre index, que cet index soit celui d'une nouvelle connexion ou un index à réinscrire.

A priori, cette solution contribue à encombrer la file et à réduire le nombre d'emplacements disponible pour inscrire des index. Toutefois, puisqu'un index fantôme occupe aléatoirement d'éventuels emplacements cible pour des index normaux, ces index normaux sont réinscrits avec un décalage aléatoire par rapport à leurs emplacements cible et il résulte que les index ne sont plus répartis périodiquement avec une probabilité de concentration. En d'autres termes, on crée de manière aléatoire des trous facilitant la recherche d'un emplacement libre à proximité d 'un emplacement cible occupé.

Toutefois, cette solution est insuffisante si les connexions deviennent trop nombreuses, car il s'avère que l'on traite de la même manière les différents types de connexions. Plus spécifiquement, toutes les connexions deviennent à débit moyen constant mais à débit instantané variable, la variation du débit instantané devenant inacceptable pour les connexions de type CBR.

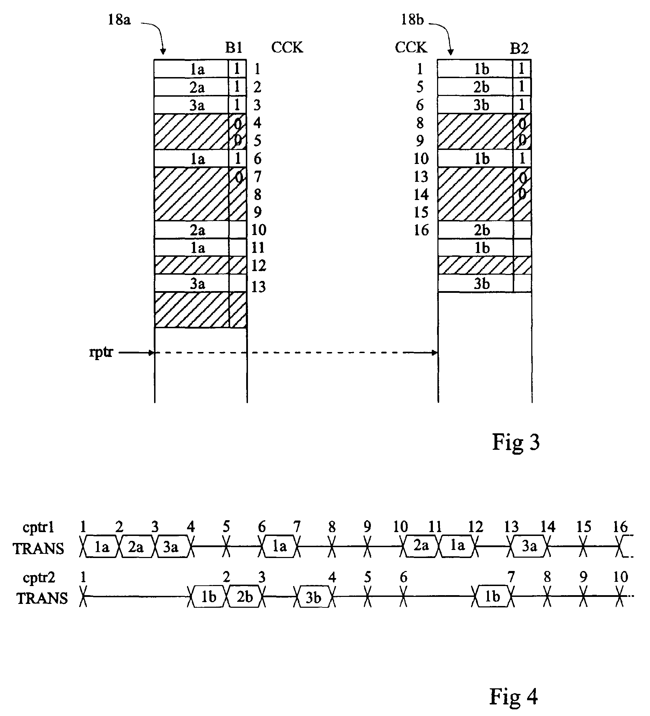

La figure 3 illustre une deuxième organisation mémoire permettant d'éviter ce problème. La file 18 de la figure 2 est séparée en deux demi-files 18a et 18b parcourues par des pointeurs de cellule indépendants cptr1 et cptr2.

Le pointeur cptr1 est incrémenté à la cadence de l'horloge cellule CCK. Lorsqu'il tombe sur un emplacement occupé, l'index est traité de la manière précédemment décrite.

En parallèle, le pointeur cptr2 parcourt la file 18b. Si le pointeur cptr2 tombe sur un emplacement vide de la file 18b, ce pointeur est incrémenté, comme le pointeur cptr1, par l'horloge CCK. Par contre, s'il tombe sur un emplacement occupé, aucune action n'est entreprise et le pointeur cptr2 n'est pas incrémenté tant que le pointeur cptr1 de la file 18a est sur un emplacement occupé. Ce n'est que lorsque le pointeur cptr1 tombe sur un emplacement vide de la file 18a que l'emplacement sur lequel s'était arrêté le pointeur cptr2 est traité, c'est-à-dire que la cellule correspondante est émise et que le pointeur cptr2 est incrémenté.

La figure 4 représente un chronogramme, dans le cadre d'un exemple, illustrant le traitement d'index inscrits dans les files 18a et 18b. On suppose que l'on inscrit dans chacune des files 18a et 18b des connexions de même débit que celles mentionnées en relation avec la figure 2. Les connexions sont désignées 1a, 2a et 3a dans la file 18a et 1b, 2b et 3b dans la file 18b. On a marqué à la figure 3, à côté des emplacements des files, les cycles consécutifs de l'horloge de cellule CCK, correspondant aux instants où les pointeurs tombent sur ces emplacements.

Au premier cycle, les pointeurs cptr1 et cptr2 indiquent tous deux des emplacements occupés, contenant respectivement un index 1a et un index 1b. L'index la est traité immédiatement tandis que le traitement de l'index 1b est retardé et on empêche l'incrémentation du pointeur cptr2.

Aux cycles 2 et 3, le pointeur cptr1 tombe sur les index 2a et 3a qui sont traités immédiatement tandis que le pointeur cptr2 est toujours figé.

Aux cycles 4 et 5, le pointeur cptr1 tombe sur des emplacements vides. Ceci permet le traitement des index 1b et 2b de la file 18b.

Au cycle 6, le pointeur cptr1 tombe sur un emplacement occupé par l'index 1a, lequel index est immédiatement traité tandis que le pointeur cptr2, qui indique le troisième emplacement de la file 18b contenant l'index 3b, est retardé.

Au septième cycle, le pointeur cptr1 tombe de nouveau sur un emplacement vide, ce qui permet le traitement de l'index 3b de la file 18b.

Aux cycles 8 et 9, le pointeur cptr1 tarte sur deux autres emplacements vides tandis que le pointeur cptr2 est incrémenté et tombe également sur deux emplacements vides. Aucun traitement n'est effectué.

Au cycle 10, le pointeur cptr1 tombe sur un emplacement occupé par l'index 2a et le pointeur cptr2 tombe sur un emplacement contenant l'index 1b. On traite l'index 2a tandis que le traitement de l'index 1b est retardé. Cet index 1b est traité au douzième cycle, lorsque le pointeur cptr1 tombe de nouveau sur un emplacement vide. Et ainsi de suite.

On s'aperçoit avec la configuration de la figure 3 que les connexions inscrites dans la file 18a sont traitées en priorité par rapport à celles inscrites dans la file 18b. On propose donc, selon l'invention, d'inscrire dans la file 18a les connexions auxquelles on doit affecter une priorité élevée, notamment les connexions de type CBR et VBR temps réel, et on inscrit dans la file 18b les autres connexions, à savoir VBR non temps réel, ABR et UBR.

Pour éviter des situations où les connexions de la file 18b ne seraient pas traitées à temps du fait que la file 18a comporte un grand nombre d'index consécutifs, on emploiera avantageusement la solution précédemment décrite consistant à inscrire dans la file 18a des index fantômes. Comme on l'a précédemment mentionné, ceci permet d'éviter une concentration d'index consécutifs dans la file 18a, et favorise donc la présence régulière d'emplacements vides permettant un traitement régulier de la file 18b. En outre, lorsque le pointeur cptr1 de la file 18a tombe sur un index fantôme, puisqu'aucune cellule n'est à émettre, on traitera un emplacement occupé de la file 18b dans le même temps cellule.

On prévoit selon l'invention une deuxième solution permettant d'éviter des retards de traitement de la deuxième file 18b. Elle consiste à incrémenter le pointeur cptr1 de la première file 18a avec une horloge CCK de période légèrement inférieure à un temps cellule et à prévoir un pointeur de débit rptr qui est synchrone à la transmission des cellules et incrémenté d'un nombre d'emplacements N tous les N temps cellule.

Afin de compenser l'avance que prend le pointeur cptr1 par rapport à la transmission réelle, l'incrémentation de ce pointeur cptr1 est suspendue lorsqu'il rattrape le pointeur de débit rptr. Pendant cette suspension, on traite des emplacements occupés de la file 18b. Dès que le pointeur rptr est incrémenté (de N), le pointeur cptr1 reprend son incrémentation normale.

L' écart de période de l'horloge CCK par rapport au temps cellule et l'incrément N du pointeur de débit rptr sont choisis pour que le pointeur de cellule cptr1 ait quelques emplacements d'avance au matent où il rattrape le pointeur rptr, le nombre effectif d'emplacements d'avance pouvant être déterminé de manière dynamique en fonction du nombre de connexions inscrites dans la première file 18a. Bien entendu, au moment où le pointeur cptr1 rattrape le pointeur rptr, le traitement de quelques index sera terminé alors que les cellules correspondantes n'ont pas encore été émises. L'es requêtes anticipées de lecture des mémoires FIFO 16 (figure 2) qui en résultent seront stockées dans des mémoires tampon correspondantes de quelques éléments.

Le pointeur cptr2 de la deuxième file 18b est incrémenté par la même horloge CCK que le pointeur cptr1, d'où il résulte que ce pointeur cptr2 est susceptible de prendre de l'avance comme le pointeur cptr1. Son incrémentation sera également suspendue s'il rattrape le pointeur de débit rptr.

Si les deux solutions susmentionnées, en combinaison, ne permettent pas de traiter la file 18b suffisamment vite, on propose une troisième solution à utiliser en combinaison au moins avec celle utilisant le pointeur de débit rptr. Cette solution consiste à compter le nombre de cellules émises dans la première file 18a et à figer le pointeur cptr1 lorsque le compte atteint une valeur limite. Pendant que le pointeur cptr1 est figé, on traite exclusivement la file 18b. Le compteur de cellules émises est réinitialisé au moment où le pointeur de débit rptr est incrémenté, ce qui permet de nouveau l'incrémentation du compteur cptr1.

A titre d'exemple, on utilise un incrément N = 8 pour le pointeur de débit rptr, une fréquence d'horloge CCK telle que le pointeur cptr1 prend une avance de 6 cellules lorsqu'il rattrape le pointeur de débit rptr, et un nombre maximal de 5 cellules émises dans la file 18a avant l'arrêt de l'incrémentation du pointeur cptr1.

L'organisation de la figure 3 permet de facilement allouer des bandes passantes minimales aux différents types de connexion. Pour cela, on compte le nombre de connexions de chaque type dans les files, et on interdit la création de nouvelles connexions d'un type donné lorsque le nombre de connexions de ce type donné atteint une valeur maximale, laissant ainsi une bande passante minimale pour des connexions d 'un autre type. On pourra procéder de manière plus fine en comptabilisant, non pas les connexions d'un type donné, mais les débits moyens des connexions.

Dans ce cas, les pointeurs de cellule cptr1 et cptr2 seront incrémentés à des fréquences différentes, correspondant respectivement aux bandes passantes allouées aux types de connexions associées aux files 18a et 18b. On prévoit alors également deux pointeurs de débit rptr associés respectivement aux files 18a et 18b.

Bien entendu, la présente invention est susceptible de diverses variantes et modifications qui apparaîtront à l'homme de l'art. En particulier, la répartition des types de connexion de la figure 3 peut être étendu à plus de deux files de priorités décroissantes, le traitement d'un index contenu dans une file de basse priorité étant suspendu jusqu'au moment où les pointeurs de toutes les files plus prioritaires indiquent en même temps un emplacement vide.

En particulier, on pourra placer avant la première file 18a et entre les deux files, des mémoires FIFO de faible taille contenant respectivement des données très prioritaires et, dans le cadre des réseaux ATM, des données d'administration (OAM - "Operation Administration and Maintenance") qui seront émises en une salve à chaque fois que les mémoires FIFO correspondantes seront sélectionnées. L'index utilisé est exclu de la mémoire FIFO après chaque émission.

## Revendications

1. Procédé de régulation des débits de plusieurs transmissions numériques concourantes comprenant les étapes suivantes :
• inscrire, pour chaque transmission de priorité élevée, un index correspondant à une cellule de données de la transmission de priorité élevée à un emplacement d'une première file (18a) ;
• inscrire de la même manière dans une deuxième file (18b) des index correspondant à des transmissions de priorité inférieure ;
examiner successivement les emplacements de la première file à une cadence (CCK) correspondant à la cadence de transmission des cellules, et si un emplacement courant de la première file contient un index, transmettre la cellule correspondante, libérer l'emplacement courant de la première file et inscrire ledit index, dans la première file, à un emplacement distant dudit emplacement courant de la première file d'une valeur déterminée par le débit de la transmission associée ;
• examiner successivement les emplacements de la deuxième file ; et
• si un emplacement courant de la deuxième file contient un index, transmettre la cellule correspondante lorsque l'examen de la première file tombe sur un emplacement vide, libérer l'emplacement courant de la deuxième file et inscrire l'index, dans la deuxième file, à un emplacement distant dudit emplacement courant de la deuxième file d'une valeur déterminée par le débit de la transmission associée.

2. Procédé de régulation de débit selon la revendication 1, caractérisé en ce qu'il comprend les étapes suivantes :
• examiner successivement les emplacements de la première file à une cadence supérieure à la cadence de transmission des cellules ;
• suspendre l'examen de la première file en atteignant un emplacement indiqué par un pointeur de débit (rptr) qui est incrémenté par N emplacements à la fois à la cadence de transmission de N cellules ; et
• si un emplacement courant de la deuxième file contient un index, transmettre la cellule correspondante lorsque l'examen de la première file tombe sur un emplacement vide ou que l'examen de la première file est suspendu.

3. Procédé de régulation de débit selon la revendication 1 ou 2, caractérisé en ce que l'examen de la première file est suspendu lorsque le nombre d'index rencontrés dans la première file atteint une limite prédéterminée, l'examen reprenant à l'incrémentation du pointeur de débit.

4. Procédé de régulation de débit selon la revendication 1, caractérisé en ce qu'il comprend les étapes suivantes :
• inscrire dans un emplacement de la première file un index fantôme ; et
• si un emplacement examiné dans la première file contient un index fantôme, libérer l'emplacement et inscrire l'index fantôme dans la première file à une distance aléatoire.

5. Procédé de régulation de débit selon l'une des revendications 1 à 4, caractérisé en ce qu'il comprend les étapes suivantes :
• compter le nombre de transmissions de chaque type correspondant aux index inscrits dans la ou les files ; et
• si le nombre de transmissions d'un type donné atteint une limite prédéterminée, interdire toute création d'une nouvelle transmission de ce type.
